# EUROPÄISCHE PATENTSCHRIFT

(11) **EP 4 065 422 B1**
(45) Veröffentlichungstag und Bekanntmachung des Hinweises auf die Patenterteilung: **17.04.2024**
(21) Anmeldenummer: 20861975.9
(22) Anmeldetag: 25.11.2020
(51) Int. Cl.: B60R 15/00

(54) **SYSTEM ZUR WASSERVER- UND -ENTSORGUNG IN EINEM CAMPINGFAHRZEUG**
SYSTEM FOR WATER SUPPLY AND REMOVAL IN A CAMPING VEHICLE
SYSTÈME D'ALIMENTATION EN EAU ET D'ÉVACUATION D'EAU DANS UN VÉHICULE DE CAMPING

(30) Priorität: 25.11.2019 DE 102019131888
(43) Veröffentlichungstag der Anmeldung: 05.10.2022
(73) Patentinhaber: Erwin Hymer Group SE, 88339 Bad Waldsee (DE)
(72) Erfinder: METZLER, Marcus, 88339 Bad Waldsee (DE); DORN, Günter, 88282 Schlier (DE); BUCK, Rainer, 88239 Wangen i. Allgäu (DE)
(74) Vertreter: Müller Schupfner & Partner Patent- und Rechtsanwaltspartnerschaft mbB
(86) Internationale Anmeldenummer: PCT/EP2020/083436
(87) Internationale Veröffentlichungsnummer: WO 2021/105251

(56) Entgegenhaltungen:
- DE-A1- 10 056 695
- DE-A1-102004 038 043
- DE-B3-102018 006 973
- GB-A- 2 550 580
- IT-A1-201700 003 308

## Beschreibung

Die Erfindung betrifft ein System zur Wasserver- und -entsorgung zur Verwendung in einem Campingfahrzeug sowie ein Verfahren zur Überwachung und/oder Steuerung eines solchen Systems.

Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen kann zum Beispiel alternativ als Caravan oder Campinganhänger bezeichnet werden. Campingfahrzeuge werden alternativ auch Freizeitfahrzeugen genannt.

Unter einem System zur Wasserver- und -entsorgung wird ein System verstanden, welches mindestens einen Verbraucher mit Wasser versorgen und/oder Abwasser des mindestens einen Verbrauchers entsorgen kann.

Im Stand der Technik sind Systeme zur Wasserver- und -entsorgung bei Campingfahrzeugen bekannt, welche getrennte Frischwassertanks und Abwassertanks aufweisen.

Aus der IT 2017 0000 3308 A1 ist ein System zur Wasserver- und -entsorgung zur Verwendung in einem Campingfahrzeug bekannt, wobei der Frischwassertank und der Abwassertank variable Volumina haben.

Eine Aufgabe der vorliegenden Erfindung liegt darin, ein System zur Wasserver- und - entsorgung bei Campingfahrzeugen anzugeben, welches den Stand der Technik verbessert. Es ist insbesondere eine Aufgabe der Erfindung, ein solches System anzugeben, bei dem das zur Verfügung stehende Tankvolumen effizient und variabel genutzt werden kann.

Diese Aufgabe wird durch ein System zur Wasserver- und -entsorgung mit den Merkmalen des Patentanspruchs 1 gelöst.

Vorteilhafte Weiterbildungen der Erfindung sind in den Unteransprüchen angegeben.

Gemäß der Lehre der vorliegenden Erfindung ist die Summe der Volumina des Frischwassertanks und des Abwassertank kleiner oder gleich dem vorgegebenen Volumen.

Ein Kerngedanke der Erfindung besteht darin, dass durch zwei volumenvariable Tanks für Frisch- und Abwasser, welche nebeneinander angeordnet sind, Stauraum in einem Campingfahrzeug gespart werden kann bzw. effektiver genutzt werden kann.

Gemäß einer bevorzugten Ausführungsform weist das System einen Frischwassertank, einen Abwassertank, einen ersten Verbraucher, eine Frischwasser- Zulaufleitung, welche mit dem Frischwassertank verbunden ist, einen ersten Durchflusssensor, welcher in der Frischwasser-Zulaufleitung angeordnet ist, eine zwischen dem ersten Verbraucher und dem Frischwassertank angeordnete Frischwasserpumpe, eine zwischen einer Ablaufleitung des ersten Verbrauchers und dem Abwassertank angeordnete Abwasserwasserpumpe, einen zweiten Durchflusssensor, welcher zwischen der Abwasserpumpe und dem Abwassertank angeordnet ist, einen Frischwasserablauf des Frischwassertanks und einen Abwasserablauf des Abwassertanks auf.

Unter einem Verbraucher wird vorliegend jedes System in einem Campingfahrzeug verstanden, welches Wasser verbrauchen kann. Verbraucher können zum Beispiel folgende Vorrichtungen sein: Dusche, Waschbecken, Spüle, WC-Spülung, Wasserspender, Bidet, Badewanne, Brausen oder Küchenarmaturen.

Um den Frischwassertank über den Einfüllstutzen und die Frischwasser-Zulaufleitung zu befüllen, ist in der Regel Druck vonnöten.

Der erste Durchflusssensor misst die Durchflussmenge des durch die Frischwasser-Zulaufleitung in den Frischwassertank laufenden Frischwassers.

Die zwischen dem ersten Verbraucher und dem Frischwassertank angeordnete Frischwasserpumpe dient dem Pumpen von Frischwasser zum ersten Verbraucher.

Bevorzugt weist das System mehr als zwei Verbraucher auf. Hierbei ist es weiter bevorzugt, dass für jeden Verbraucher ein jeweiliger Durchflusssensor vorhanden ist. Hierbei wird das Frischwasser von der Frischwasserpumpe in einer Leitung zu den Verbrauchern gefördert. Bevorzugt sind die Verbraucher in Serie geschaltet.

Die zwischen der Ablaufleitung des ersten Verbrauchers und dem Abwassertank angeordnete Abwasserwasserpumpe dient dem Fördern von Abwasser vom ersten Verbraucher zum Abwassertank. Es wird Druck benötigt, um den Abwassertank zu befüllen.

Der zweite Durchflusssensor dient dem Ermitteln der Menge des in den Abwassertank fließenden Abwassers.

Über den Frischwasserablauf des Frischwassertanks kann gegebenenfalls Frischwasser aus dem Frischwassertank abgelassen werden. Über den Abwasserablauf des Abwassertanks kann gegebenenfalls Abwasser aus dem Abwassertank abgelassen werden.

Die Ausdehnung des Materials des Abwassertanks begrenzt dessen Zufluss, überflüssiges Wasser kann über den Überlauf abfließen.

Bevorzugt weist die Frischwasser-Zulaufleitung einen Überlauf auf. Dies bewirkt, dass Wasser, welches aufgrund einer Begrenzung des vorgegebenen Volumens des Raums oder aufgrund einer Ausdehnungsgrenze des Materials des Frischwassertanks nicht mehr in den Frischwassertank fließen kann, sich nicht staut, sondern abfließen kann.

Der Frischwassertank wird bevorzugt aus lebensmittelechtem und/oder trinkwasserkonformem Kunststoff gefertigt.

Der Abwassertank ist bevorzugt aus PVC gefertigt.

Die Wandung des Abwassertanks oder des Frischwassertanks weist jeweils eine dünne Folie auf. Bevorzugt ist das Material des Abwassertanks oder des Frischwassertanks unfall- oder crashsicher. Besonders bevorzugt kann der Abwassertank oder der Frischwassertank bis zu 40-mal mehr Aufprallenergie absorbieren als Tanks des Stands der Technik. Bevorzugt befindet sich keine Pumpen- oder Messtechnik innerhalb der Tanks. Der Frischwassertank hat bevorzugt ein Mindest-Haltbarkeits-Datum (MHD).

Der Abwassertank oder der Frischwassertank wird jeweils anhand eines Schnittmusters konfektioniert und genäht/geschweißt. Hierzu ist bevorzugt kein Werkzeug nötig.

Die Form des Abwassertanks oder des Frischwassertanks ist beliebig. Der Abwassertank oder der Frischwassertank kann liegend oder hängend angeordnet sein.

Gemäß einer weiteren, bevorzugten Ausführungsform ist zwischen dem Frischwassertank und der Frischwasserpumpe ein dritter Durchflusssensor angeordnet. Der dritte Durchflusssensor misst die Durchflussmenge des vom Frischwassertank durch die Frischwasserpumpe zum ersten Verbraucher oder die Verbraucher geförderten Frischwassers.

Gemäß noch einer weiteren, bevorzugten Ausführungsform weist der Frischwasserablauf und / oder der Abwasserablauf jeweils einen elektrischen Verschluss auf. Mit diesem elektrischen Verschluss kann Frischwasser oder Abwasser aus dem jeweiligen Tank abgelassen werden. Mithilfe des elektrischen Verschlusses kann der jeweilige Ablauf auch verschlossen werden.

Bevorzugt ist zulaufseitig des ersten Verbrauchers ein vierter Durchflusssensor angeordnet. Der vierte Durchflusssensor misst die Durchflussmenge des von der Frischwasserpumpe zum ersten Verbraucher geförderten Frischwassers.

Es ist weiterhin bevorzugt, dass der Frischwasserablauf einen fünften Durchflusssensor und/oder der Abwasserablauf einen sechsten Durchflusssensor aufweist. Der fünfte Durchflusssensor misst die Durchflussmenge des aus dem Frischwassertank über den Frischwasserablauf hinausfließenden Frischwassers. Der sechste Durchflusssensor misst die Durchflussmenge des aus dem Abwassertank über den Abwasserablauf hinausfließenden Abwassers.

Die Erfindung wird in einem weiteren Aspekt durch ein Campingfahrzeug mit einem oben beschriebenen System gelöst.

Die Erfindung wird in einem weiteren Aspekt durch ein Verfahren zum Betreiben eines oben beschriebenen Systems gelöst. Bevorzugt dient das Verfahren einem Überwachen und/oder einer Steuerung des oben genannten Systems.

Gemäß dem Verfahren wird ein Füllstand des Frischwassertanks und/oder ein Füllstand des Abwassertanks berechnet. Bevorzugt kann eine anfängliche Kalibration durchgeführt werden, zum Beispiel kann ein leerer Frischwasser- und einem leerer Abwassertank verwendet werden, sodass die jeweiligen Füllstände gleich 0 sind.

Hierbei wird das Verfahren so durchgeführt, dass in den Frischwassertank hineinfließendes Frischwasser zum Füllstand des Frischwassertank summiert und aus dem Frischwassertank herausfließendes Wasser vom Füllstand des Frischwassertanks abgezogen wird. Dementsprechend wird in den Abwassertank hineinfließendes Abwasser zum Füllstand des Abwassertank summiert und aus dem Abwassertank herausfließendes Abwasser vom Füllstand des Abwassertank abgezogen.

Das Verfahren weist bevorzugt ferner mindestens eines der nachfolgenden Schritte auf: Erhöhen des Füllstand des Frischwassertanks durch ein Messsignal des ersten Durchlaufsensors, Erhöhen des Füllstands des Abwassertanks durch ein Messsignal des zweiten Durchlaufsensors, Erniedrigen des Füllstands des Frischwassertanks durch ein Messsignal des dritten Durchlaufsensors, Erniedrigen des Füllstands des Frischwassertanks durch eine Messsignal des vierten Durchlaufsensors, Erniedrigen des Füllstands des Frischwassertanks durch ein Messsignal des fünften Durchlaufsensors, Erniedrigen des Füllstands des Abwassertanks durch ein Messsignal des sechsten Durchlaufsensors. Ein solcher Schritt wird nur durchgeführt, falls der jeweilige Durchlaufsensor vorhanden ist.

Falls lediglich ein Verbraucher vorhanden ist, so ist die Durchflussmenge des dritten Durchlaufsensors identisch mit der Durchflussmenge des vierten Durchlaufsensors. Dem Fachmann ist klar, dass diese Menge nicht doppelt zu zählen ist.

Gemäß einer bevorzugten Ausführungsform des Verfahrens werden die Füllstände des Frischwassertank und des Abwassertanks, insbesondere in einer Computer-APP oder in einem Computerprogramm, visualisiert.

Für den Frischwassertank kann dies zum Beispiel wie folgt durchgeführt werden. Der Füllstand des Frischwassertanks wird mit der Farbe Grün visualisiert, falls der Füllstand 100% beträgt. Falls der Füllstand größer als 75% und kleiner als 100% ist, so wird der Füllstand des Frischwassertanks mit der Farbe Orange visualisiert. Falls der Füllstand größer als 50% und kleiner als 75% ist, so wird der Füllstand des Frischwassertanks mit der Farbe Gelb visualisiert. Falls der Füllstand kleiner als 25% ist, so wird der Füllstand des Frischwassertanks mit der Farbe Rot visualisiert.

Für den Abwassertank kann dies zum Beispiel wie folgt durchgeführt werden. Der Füllstand des Abwassertanks wird mit der Farbe Grün visualisiert, falls der Füllstand kleiner als 25% beträgt.

Falls der Füllstand größer als 25% und kleiner als 50% ist, so wird der Füllstand des Abwassertanks mit der Farbe Orange visualisiert. Falls der Füllstand größer als 50% und kleiner als 80% ist, so wird der Füllstand des Abwassertanks mit der Farbe Gelb visualisiert. Falls der Füllstand größer als 80% ist, so wird der Füllstand des Abwassertanks mit der Farbe Rot visualisiert.

Gemäß einer bevorzugten Ausführungsform des Verfahrens wird auf Basis eines zeitlichen Verlaufs der Füllstände des Frischwassertanks und des Abwassertanks berechnet, wann der Füllstand des Frischwassertanks leer und/oder der Füllstand des Abwassertanks voll. Hierbei ist zu betonen, dass eine Reichweite des Füllstands des Frischwassertanks und eine Reichweite des Füllstands des Abwassertanks unabhängig voneinander sind und demnach unabhängig von einander berechnet werden können. Jedoch ist es bevorzugt, dass die kleinere Reichweite berücksichtigt wird, da in der Regel ein Frischwasser- und ein Abwassertank zur Verfügung stehen sollen. Hierbei können langfristige zeitliche Verläufe berücksichtigt werden. Die zeitlichen Verläufe können ebenfalls über lange Zeiträume gemittelt werden. Falls eine durchschnittliche Geschwindigkeit des Campingfahrzeugs bekannt ist, so kann eine Reichweitenprognose für den Frischwasser- und/oder Abwassertank berechnet werden.

Gemäß noch einer weiteren bevorzugten Ausführungsform des Verfahrens wird auf Basis des zeitlichen Verlaufs der Füllstände des Frischwassertanks und des Abwassertanks sowie eines zeitlichen Verlaufs einer Position des Campingfahrzeugs berechnet, in welchem räumlichen Bereich eine Servicestation erreichbar ist. Hierbei kann der räumliche Bereich für die Reichweite des Frischwassertanks unterschiedlich von dem räumlichen Bereich für die Reichweite des Abwassertanks sein.

Unter einer Servicestation wird eine Station verstanden, an der das Abwasser entsorgt und Frischwasser getankt werden kann. Eine Sammelstation kann zum Beispiel eine Ver- / Entsorgungsstation sein.

Ein Ausführungsbeispiel der Erfindung ist in der Zeichnung dargestellt und wird in der nachfolgenden Beschreibung näher erläutert.

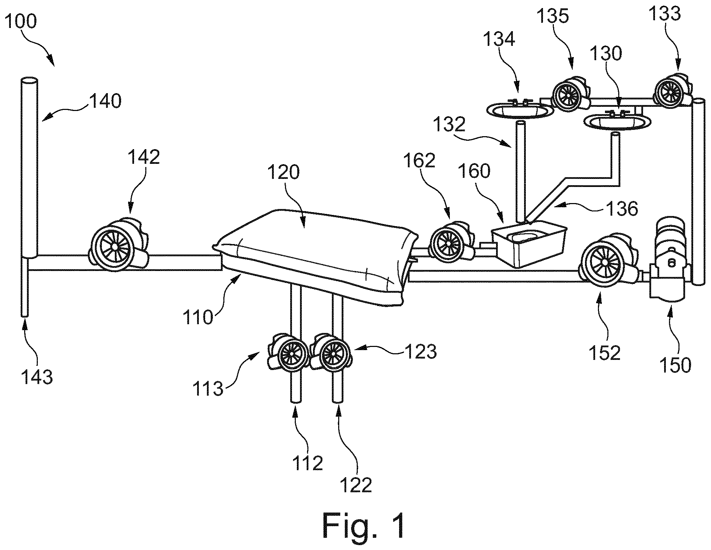

Figur 1 zeigt ein System zur Wasserver- und -entsorgung in einem Campingfahrzeug.

Das System 100 zur Wasserversorgung und Wasserentsorgung weist einen Frischwassertank 110 und einen Abwassertank 120 auf, welche in einem Raum mit einem vorgegebenen Volumen enthalten sind.

Sowohl der Frischwassertank 110 als auch der Abwassertank 120 sind flexibel und weisen ein variables Volumen auf. Die Wandungen des Frischwassertanks 110 und des Abwassertanks 120 weisen jeweils eine dünne Folie auf.

Der Frischwassertank 110 ist über eine Frischwasser-Zulaufleitung 140 mit einem Einfüllstutzen des Campingfahrzeugs verbunden. Die Frischwasser-Zulaufleitung 140 weist einen Überlauf 143 und einen danach angeordneten ersten Durchflusssensor 142 auf. Das Frischwasser kann mithilfe von Druck über die Frischwasser-Zulaufleitung 140 in den Frischwassertank 110 eingefüllt werden.

Eine ablaufseitig des Frischwassertanks 110 angeordnete Frischwasserpumpe 150 kann Frischwasser aus dem Frischwassertank 110 zu einem ersten Verbraucher 130 und einem zweiten Verbraucher 134 fördern. Sowohl der erste Verbraucher 130 als auch der zweite Verbraucher 134 sind jeweils ein Waschbecken.

Zulaufseitig des ersten Verbrauchers 130 ist ein vierter Durchflusssensor 133 und zulaufseitig des zweiten Verbrauchers 134 ist ein dritter Durchflusssensor 135 angeordnet.

Eine Abwasserpumpe 160 ist mittels einer ersten Ablaufleitung 132 mit dem ersten Verbraucher 130 und mittels einer zweiten Ablaufleitung 136 mit dem zweiten Verbraucher 134 verbunden. Das Abwasser des ersten Verbrauchers 130 und des zweiten Verbrauchers 134 kann mittels der Abwasserpumpe 160 in den Abwassertank 120 gepumpt werden. Das so in den Abwassertank 120 gepumpte Abwasser kann mithilfe eines zweiten Durchflusssensors 162 gemessen werden. Das im Frischwassertank 110 vorhandene Frischwasser kann mithilfe eines Frischwasserablaufs 112 abgelassen werden. Das im Abwassertank 120 vorhandene Abwasser kann mithilfe eines Abwasserablaufs 122 abgelassen werden.

## Patentansprüche

1. System (100) zur Wasserver- und -entsorgung zur Verwendung in einem Campingfahrzeug, wobei das System (100) einen Raum eines vorgegebenen Volumens aufweist, in dem ein Frischwassertank (110) und ein Abwassertank (120) angeordnet sind, wobei sowohl der Frischwassertank (110) als auch der Abwassertank (120) ein variables Volumen haben, wobei das System (100) aufweist: einen Frischwassertank (110); einen Abwassertank (120); eine Frischwasser-Zulaufleitung (140), welche mit dem Frischwassertank (110) verbunden ist; einen ersten Durchflusssensor (142), welcher in der Frischwasser-Zulaufleitung (140) angeordnet ist; einen ersten Verbraucher (130); und eine zwischen dem ersten Verbraucher (130) und dem Frischwassertank (110) angeordnete Frischwasserpumpe (150);
**dadurch gekennzeichnet,**
**dass** das System (100) aufweist:
eine zwischen einer ersten Ablaufleitung (132) des ersten Verbrauchers (130) und dem Abwassertank (120) angeordnete Abwasserwasserpumpe (160);
einen zweiten Durchflusssensor (162), welcher zwischen der Abwasserpumpe (160) und dem Abwassertank (120) angeordnet ist;
einen Frischwasserablauf (112) des Frischwassertanks (110); und
einen Abwasserablauf (122) des Abwassertanks (120).

2. System (100) nach Anspruch 1, **dadurch gekennzeichnet, dass** eine Wandung des Abwassertanks (120) oder des Frischwassertanks (110) eine dünne Folie aufweist.

3. System (100) nach einem der vorangegangen Ansprüche, **dadurch gekennzeichnet, dass** der Frischwasserablauf (112) und/oder der Abwasserablauf (122) einen elektrischen Verschluss aufweist.

4. System (100) nach einem der vorangegangen Ansprüche, **dadurch gekennzeichnet, dass** zulaufseitig des ersten Verbrauchers (130) ein vierter Durchflusssensor (133) angeordnet ist.

5. System (100) nach einem der vorangegangen Ansprüche, **dadurch gekennzeichnet, dass** der Frischwasserablauf (112) einen fünften Durchflusssensor (113) und/oder der Abwasserablauf (122) einen sechsten Durchflusssensor (123) aufweist.

6. Campingfahrzeug mit einem System (100) nach einem der vorangegangen Ansprüche.

7. Verfahren zum Betreiben, insbesondere Überwachen und/oder Steuern, eines Systems (100) zur Wasserver- und -entsorgung nach einem der Ansprüche 1 bis 5, **dadurch gekennzeichnet, dass** ein Füllstand des Frischwassertanks (110) und/oder ein Füllstand des Abwassertanks (120) berechnet wird, wobei das Verfahren ferner mindestens einen der nachfolgenden Schritte aufweist:
Erhöhen des Füllstands des Frischwassertanks (110) durch ein Messsignal des ersten Durchlaufsensors (142);
Erhöhen des Füllstands des Abwassertanks (120) durch ein Messsignal des zweiten Durchlaufsensors (162).

8. Verfahren nach dem vorangegangenen Anspruch, ferner aufweisend mindestens einen der nachfolgenden Schritte:
Erniedrigen des Füllstands des Frischwassertanks (110) durch ein Messsignal des dritten Durchlaufsensors (135);
Erniedrigen des Füllstands des Frischwassertanks (110) durch eine Messsignal des vierten Durchlaufsensors (133);
Erniedrigen des Füllstands des Frischwassertanks (110) durch ein Messsignal des fünften Durchlaufsensors (113); und Erniedrigen des Füllstands des Abwassertanks (120) durch ein Messsignal des sechsten Durchlaufsensors (123).

9. Verfahren nach einem der beiden vorangegangenen Ansprüche, **dadurch gekennzeichnet, dass** die Füllstände des Frischwassertank (110) und des Abwassertanks (120), insbesondere in einer Computer-APP oder in einem Computerprogramm, visualisiert werden.

10. Verfahren nach einem der Ansprüche 7 bis 9, **dadurch gekennzeichnet, dass** auf Basis eines zeitlichen Verlaufs der Füllstände des Frischwassertanks (110) und des Abwassertanks (120) berechnet wird, wann der Füllstand des Frischwassertanks 110) leer und/oder der Füllstand des Abwassertanks (120) voll ist.

11. Verfahren nach dem vorangegangenen Anspruch, **dadurch gekennzeichnet, dass** aufgrund des zeitlichen Verlaufs der Füllstände des Frischwassertanks (110) und des Abwassertanks (120) sowie eines zeitlichen Verlaufs einer Position des Campingfahrzeugs berechnet wird, in welchem räumlichen Bereich eine Servicestation erreichbar ist.

## Claims

1. System (100) for the supply and disposal of water for use in a camping vehicle, wherein the system (100) comprises a space of a predetermined volume in which a fresh water tank (110) and a waste water tank (120) are arranged, whereby both the fresh water tank (110) and the waste water tank (120) have a variable volume, wherein the system (100) comprises: a fresh water tank (110); a waste water tank (120); a fresh water feed line (140) connected to the fresh water tank (110); a first flow sensor (142) located in the fresh water feed line (140); a first load (130); and a fresh water pump (150) arranged between the first load (130) and the fresh water tank (110);
**characterised in that**
the system (100) comprises:
a waste water pump (160) arranged between a first outlet line (132) of the first load (130) and the waste water tank (120); a second flow sensor (162), which is arranged between the waste water pump (160) and the waste water tank (120); a fresh water drain (112) of the fresh water tank (110); and a waste water drain (122) of the waste water tank (120).

2. A system (100) according to claim 1, **characterised in that** a wall of the waste water tank (120) or the fresh water tank (110) comprises a thin film.

3. A system (100) according to one of the preceding claims, **characterised in that** the fresh water drain (112) and/or the waste water drain (122) has an electrical closure.

4. System (100) according to one of the preceding claims, characterised that a fourth flow sensor (133) is arranged on the inlet side of the first load (130).

5. System (100) according to one of the preceding claims, **characterised in that** the fresh water drain (112) has a fifth flow sensor (113) and/or the waste water drain (122) has a sixth flow sensor (123).

6. A camping vehicle comprising a system (100) according to any one of the preceding claims.

7. Method for operating, in particular monitoring and/or controlling, a system (100) for water supply and disposal according to any one of claims 1 to 5, **characterised in that** a fill level of the fresh water tank (110) and/or a fill level of the waste water tank (120) is calculated, the method further comprising at least one of the following steps:
Increasing the level of the fresh water tank (110) by a measuring signal from the first flow sensor (142);
Increasing the level of the waste water tank (120) by a measuring signal from the second flow sensor (162).

8. A method according to the preceding claim, further comprising at least one of the following steps:
Lowering the level of the fresh water tank (110) by means of a measuring signal from the third flow sensor (135);
Lowering the level of the fresh water tank (110) by means of a measuring signal from the fourth flow sensor (133);
lowering the level of the fresh water tank (110) by means of a measuring signal of the fifth flow sensor (113); and lowering the level of the waste water tank (120) by means of a measuring signal from the sixth flow sensor (123).

9. Process according to one of the two preceding claims, **characterised in that characterised in that** the fill levels of the fresh water tank (110) and the waste water tank (120) are visualised, in particular in a computer APP or in a computer program.

10. A method according to any one of claims 7 to 9, **characterised in that** it is calculated when the fill level of the fresh water tank (110) is empty and/or the fill level of the waste water tank (120) is full based on a time history of the fill levels of the fresh water tank (110) and the waste water tank (120).

11. Method according to the preceding claim, **characterised in that**, on the basis of the time history of the filling levels of the fresh water tank (110) and the waste water tank (120) as well as a time history of the vehicle's position, it is calculated in which area a service station can be reached.

## Revendications

1. Système (100) d'alimentation et d'élimination d'eau pour une utilisation dans un véhicule de camping, dans lequel le système (100) présente un espace d'un volume donné dans lequel un réservoir d'eau fraîche (110) et un réservoir d'eau usée (120) sont agencés, le réservoir d'eau fraîche (110) et le réservoir d'eau usée (120) ayant tous deux un volume variable, dans lequel le système (100) présente : un réservoir d'eau fraîche (110) ; un réservoir d'eau usée (120) ; une conduite d'arrivée d'eau fraîche (140) qui est reliée au réservoir d'eau fraîche (110) ; un premier capteur d'écoulement (142) qui est agencé dans la conduite d'arrivée d'eau fraîche (140) ; un premier consommateur (130) ; et une pompe à eau fraîche (150) agencée entre le premier consommateur (130) et le réservoir d'eau fraîche (110) ;
**caractérisé en ce que**
le système (100) présente :
une pompe à eau usée (160) agencée entre une première conduite d'évacuation (132) du premier consommateur (130) et le réservoir d'eau usée (120) ;
un deuxième capteur d'écoulement (162) qui est agencé entre la pompe à eau usée (160) et le réservoir d'eau usée (120) ;
une évacuation d'eau fraîche (112) du réservoir d'eau fraîche (110) ; et
une évacuation d'eau usée (122) du réservoir d'eau usée (120).

2. Système (100) selon la revendication 1, **caractérisé en ce qu'**une paroi du réservoir d'eau usée (120) ou du réservoir d'eau fraîche (110) présente un film mince.

3. Système (100) selon l'une quelconque des revendications précédentes, **caractérisé en ce que** l'évacuation d'eau fraîche (112) et/ou l'évacuation d'eau usée (122) présentent une fermeture électrique.

4. Système (100) selon l'une quelconque des revendications précédentes, **caractérisé en ce qu'**un quatrième capteur d'écoulement (133) est agencé côté arrivée du premier consommateur (130).

5. Système (100) selon l'une quelconque des revendications précédentes, **caractérisé en ce que** l'évacuation d'eau fraîche (112) présente un cinquième capteur d'écoulement (113) et/ou l'évacuation d'eau usée (122) présente un sixième capteur d'écoulement (123).

6. Véhicule de camping comprenant un système (100) selon l'une quelconque des revendications précédentes.

7. Procédé de fonctionnement, en particulier de surveillance et/ou de commande, d'un système (100) d'alimentation et d'élimination d'eau selon l'une quelconque des revendications 1 à 5,
**caractérisé en ce qu'**un niveau de remplissage du réservoir d'eau fraîche (110) et/ou un niveau de remplissage du réservoir d'eau usée (120) sont calculés, le procédé présentant en outre l'une au moins des étapes suivantes consistant à :
augmenter le niveau de remplissage du réservoir d'eau fraîche (110) via un signal de mesure du premier capteur d'écoulement (142) ;
augmenter le niveau de remplissage du réservoir d'eau usée (120) via un signal de mesure du deuxième capteur d'écoulement (162).

8. Procédé selon la revendication précédente, présentant en outre l'une au moins des étapes suivantes consistant à :
abaisser le niveau de remplissage du réservoir d'eau fraîche (110) via un signal de mesure du troisième capteur d'écoulement (135) ;
abaisser le niveau de remplissage du réservoir d'eau fraîche (110) via un signal de mesure du quatrième capteur d'écoulement (133) ;
abaisser le niveau de remplissage du réservoir d'eau fraîche (110) via un signal de mesure du cinquième capteur d'écoulement (113) ; et
abaisser le niveau de remplissage du réservoir d'eau usée (120) via un signal de mesure du sixième capteur d'écoulement (123).

9. Procédé selon l'une des deux revendications précédentes, **caractérisé en ce que** les niveaux de remplissage du réservoir d'eau fraîche (110) et du réservoir d'eau usée (120) sont visualisés, en particulier dans une application d'ordinateur ou dans un programme d'ordinateur.

10. Procédé selon l'une quelconque des revendications 7 à 9, **caractérisé en ce que**, sur la base d'une évolution dans le temps des niveaux de remplissage du réservoir d'eau fraîche (110) et du réservoir d'eau usée (120), il est calculé quand le niveau de remplissage du réservoir d'eau fraîche (110) est vide et/ou quand le niveau de remplissage du réservoir d'eau usée (120) est plein.

11. Procédé selon la revendication précédente, **caractérisé en ce que**, sur la base de l'évolution dans le temps des niveaux de remplissage du réservoir d'eau fraîche (110) et du réservoir d'eau usée (120), ainsi que d'une évolution dans le temps d'une position du véhicule de camping, il est calculé dans quelle zone spatiale il est possible d'atteindre une station-service.
